# FASCICULE DE BREVET EUROPEEN

(11) **EP 1 322 544 B1**
(45) Date de publication et mention de la délivrance du brevet: **22.12.2004**
(21) Numéro de dépôt: 01969881.0
(22) Date de dépôt: 13.09.2001
(51) Int. Cl.: B67D 5/70

(54) **ENSEMBLE A BRAS ARTICULE DE CHARGEMENT ET DE DECHARGEMENT DE PRODUITS, EN PARTICULIER DE PRODUITS FLUIDES**
ANORDNUNG MIT GELENKARM ZUM LADEN UND ENTLADEN VON PRODUKTEN, INSBESONDERE VON STRÖMUNGSFÄHIGEN PRODUKTEN
ASSEMBLY WITH ARTICULATED ARM FOR LOADING AND UNLOADING PRODUCTS, IN PARTICULAR FLUID PRODUCTS

(30) Priorité: 14.09.2000 FR 0011748
(43) Date de publication de la demande: 02.07.2003
(73) Titulaire: FMC Technologies S.A., 89100 Sens (FR)
(72) Inventeur: LE DEVEHAT, Renaud, F-89260 Thorigny Sur Oreuse (FR)
(74) Mandataire: Kurtz, Laurent
(86) Numéro de dépôt international: PCT/FR2001/002846
(87) Numéro de publication internationale: WO 2002/022491

(56) Documents cités:
- EP-A- 0 323 355
- FR-A- 2 368 434
- GB-A- 1 591 646
- US-A- 3 249 121
- US-A- 4 299 261

## Description

L'invention a pour objet un bras articulé de chargement et de déchargement de produits, en particulier de produits fluides, comme par exemple des produits pétroliers (gaz naturel liquéfié ...).

Il s'agit plus particulièrement d'un bras de chargement équilibré équipé d'un coupleur hydraulique permettant d'effectuer un transfert entre deux navires amarrés côté à côte, entre n navire et une plate-forme ou une barge flottante amarrés côte à côte, ou encore entre une jetée sur laquelle est installé le bras de chargement et un navire amarré à côté de cette jetée.

Un exemple de ce genre de bras est décrit dans le document GB-2 042 466. La connexion de l'extrémité de ce bras à un moyen de couplage prévu sur le navire est difficile, voire impossible à réaliser en conditions de mer difficiles. En outre, dans ces conditions, les risques de chocs entre cette extrémité et le moyen de couplage sont importants. Dans la plupart des cas, ces chocs entraînent des dommages sur les composants constituant l'extrémité du bras ou le moyen de couplage. Un autre exemple est décrit dans le document GB 1 591 646, selon le préambule de la revendication 1.

L'invention a pour objet de pallier ces inconvénients. Elle vise notamment à permettre la connexion/déconnexion du bras de chargement à des navires en conditions de mer difficile.

A cette fin, elle propose un ensemble de chargement et de déchargement de produits, qui comporte un bras de chargement et de déchargement installé à un premier emplacement et ayant un compas de canalisation monté par l'une de ses extrémités sur une embase et pourvu à l'autre de ses extrémités d'un système de raccordement du compas de canalisation à un moyen de couplage installé au second emplacement, un câble étant relié par l'une de ses extrémités au système de raccordement et par l'autre de ses extrémités à des moyens adaptés à soumettre ce câble à une tension constante, et qui est caractérisé en ce qu'il comporte en outre un treuil de connexion sur lequel est enroulé un câble de connexion permettant d'amener système de raccordement dans une position de connexion au moyen de couplage, à l'encontre de la tension constante exercée sur le câble relié au système de raccordement et en ce que le bras de chargement et de déchargement est un bras équilibré.

Grâce à un tel ensemble, on apporte une réponse aux besoins qui viennent d'être mentionnés. En effet, il permet l'approche du système de raccordement vers le moyen de couplage installé à l'emplacement en mouvement, tel qu'un navire, et une connexion dans de bonnes conditions.

D'autres caractéristiques et avantages de l'invention ressortiront de la description qui va suivre, faite en regard des dessins annexés sur lesquels :
- la figure 1 est une vue en élévation latérale d'un ensemble de chargement/déchargement conforme à un mode de réalisation conforme à l'invention ;
- la figure 2 est une vue interrompue selon la flèche A de la figure 1 ;
- la figure 3 est une vue en élévation latérale avec agrandissement du système de raccordement de l'ensemble de la figure 1 ;
- la figure 4 est une vue similaire à celle de la figure 3 et montre un système de raccordement conforme à un mode de réalisation préféré de l'invention ; et
- les figures 5 à 8 sont des vues en élévation latérale de l'ensemble de la figure 1, qui montrent certaines étapes de la procédure de connexion du bras de chargement et de déchargement de cet ensemble à un moyen de couplage.

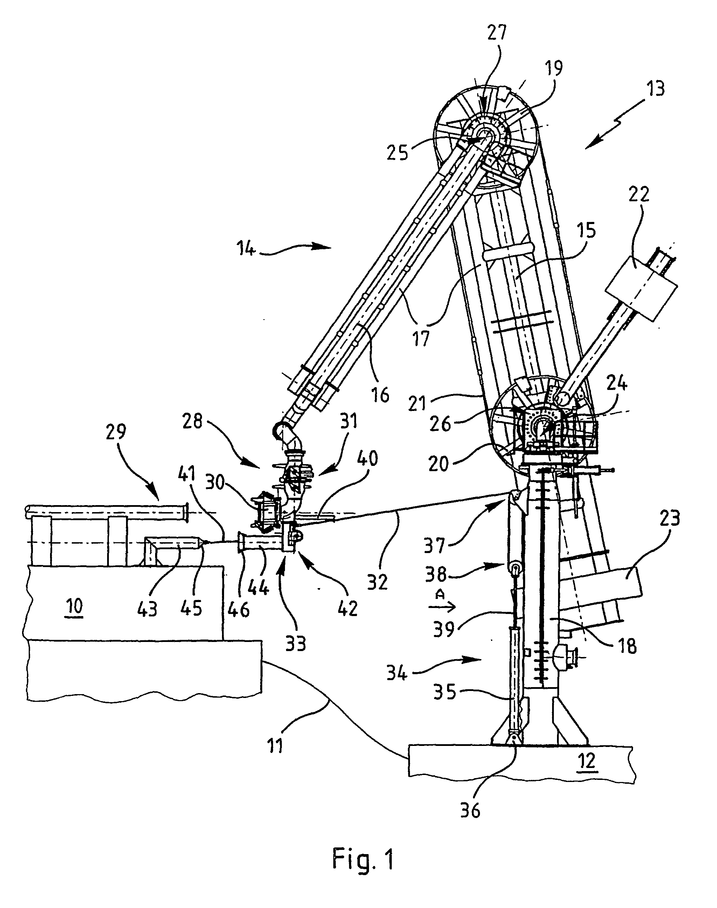

Sur la figure 1 est représenté en 10 un navire citerne amarré au moyen d'une amarre 11 à une jetée 12 en étant disposé à côté de cette dernière. Un ensemble de chargement et de déchargement de fluide 13 conforme à un mode de réalisation de l'invention permet de transférer, ici, du gaz naturel liquéfié du navire citerne 10 vers des réservoirs installés sur la jetée 12 ou à proximité de celle-ci et raccordés à l'ensemble de transfert de fluide 13, ou vice versa.

A cet effet, l'ensemble 13 comporte un bras de chargement et de déchargement 14 ayant un compas de canalisation comportant un tube interne 15 et un tube externe 16 et porté par un compas de support 17 à deux branches trouvant un support sur une embase commune 18.

Ce bras 14 est, ici, équilibré au moyen d'un système de contrepoids comportant deux poulies 19 et 20, reliées l'un à l'autre au moyen d'un câble 21, et deux contrepoids 22 et 23. Le contrepoids 22 est monté sur la poulie 20, tandis que le contrepoids 23 est monté sur la branche du compas de structure 17 portée par l'embase 18.

Une canalisation fixe longe l'intérieur de l'embase 18 et est reliée au tube interne 15 par une articulation 24 comportant deux coudes à 90° et deux joints tournants, ici, cryogéniques et du type joints tournants Chiksan®.

Une articulation 25 comportant deux coudes et un joint tournant permet de relier le tube interne 15 au tube externe 16.

L'articulation entre les branches du compas de support 17 et entre ce compas et l'embase 18 est réalisée au moyen de paliers à billes 26 et 27, entourant respectivement les articulations 24 et 25.

Des vérins hydrauliques, non visible sur la figure 1, permettent de manoeuvrer le bras de chargement et de déchargement 14.

Un système de raccordement 28 permet de raccorder le tube externe 16 à un moyen de couplage formé par un manifold 29 situé sur le navire citerne 10.

Ce système de raccordement 28 comporte un coupleur hydraulique 30 relié par des coudes et des joints tournants au tube externe 16. Le tronçon de conduite formé par ces coudes et joints tournants est, par ailleurs, pourvu d'un système de déconnexion d'urgence 31.

L'ensemble de chargement et de déchargement 13 tel qu'il vient d'être décrit est bien connu de l'homme du métier et ne sera donc pas décrit plus en détails ici.

Conformément à l'invention, un câble 32 est relié par l'une de ses extrémités à un support 33 solidaire du système de raccordement 28.

L'autre extrémité de ce câble 32 est reliée à des moyens 34 adaptés à le soumettre à une tension constante.

Ces moyens 34 comportent un vérin hydraulique doublé effet 35 fixé, ici, à la jetée 12 au moyen d'une chape 36. Il s'étend parallèlement à l'embase 18.

Les moyens 34 comportent également deux jeux de poulies 37 et 38, ayant chacun deux poulies de renvoi autour desquelles est enroulé le câble 32.

Le jeu de poulies 38 est fixé par sa chape à la tige de piston 39 du vérin 35, tandis que la chape du jeu de poulie 37 est fixée à l'embase 18. Il est ainsi possible de multiplier la course d'extension du câble 32 par huit.

Pour appliquer une tension constante au câble quelles que soient sa vitesse et sa longueur sur laquelle il s'étend entre l'embase 18 et le support 33, le vérin 35 est alimenté sous une pression hydraulique constante.

Une tige 40 fixée au support 33 et pourvue d'un anneau par lequel passe le câble 32 permet, en outre, de maintenir le système de raccordement 28 aligné avec le câble 32 et un câble de connexion 41 permettant d'amener le système de raccordement 28 en position de connexion au manifold 29.

Ce câble de connexion 41 est enroulé sur un treuil 42, fonctionnant à vitesse constante, qui est également fixé au support 33.

Il est à noter, à cet égard, que plus la distance entre les points d'attache des câbles 32 et 41 au système de raccordement 28 est grande, meilleur est l'alignement de ce système 28 sur ces câbles 32 et 41. Comme on le voit sur la figure 1, la tige 40 permet d'augmenter cette distance.

Etant donné que le câble 32 est attaché au support 33, la charge de tension n'est pas entièrement appliquée à cette tige d'alignement 40. En fait, seule une composante latérale est appliquée à cette tige 40 lorsque le système de raccordement 28 est hors d'alignement.

Deux tronçons de tube 43 et 44, pénétrant l'un dans l'autre, permettent de guider le système de raccordement 28 lorsque celui-ci arrive près de la bride du manifold 29.

Le tronçon mâle 43 est monté sur le navire citerne 10 et s'étend sous le manifold 29. Son extrémité avant, à laquelle on vient accrocher le câble de connexion 41, est située en avant de la bride du manifold 29.

Le tronçon femelle 44 est traversé par le câble de connexion 41 et fixé au support 33, sous le coupleur hydraulique 30. L'extrémité libre de ce tronçon femelle 44 est, de son côté, situé en avant du coupleur hydraulique 30.

On limite ainsi les possibilités de chocs entre le connecteur 30 et la bride du manifold 29.

En outre, chaque extrémité libre des tronçons de tube de guidage 43 et 44 est formé par un cône de centrage 45, 46.

Par ailleurs, le diamètre intérieur du tronçon de tube femelle 44 est supérieur au diamètre extérieur du tronçon de tube mâle 43, afin d'éviter tout risque de coincement.

Une fois que ces deux tronçons de tube de guidage 43 et 44 sont engagés l'un dans l'autre, le seul mouvement encore possible entre le coupleur hydraulique 30 et la bride du manifold 29 résulte du jeu entre ces deux tubes. Ce mouvement est aisément compensé par les moyens de guidage existant sur le coupleur hydraulique 30.

Il est encore à noter qu'un filin, non visible sur les figures, est utilisé pour amener le câble de connexion 41 à l'extrémité avant du tronçon de tube 43, au début de la procédure de connexion.

Lors de cette procédure de connexion, le bras de chargement et de déchargement 14 est mis en "roue libre" par mise en commun des chambres des vérins hydrauliques de manoeuvre de ce bras 14. De préférence, pour limiter les oscillations du bras, il est mis en oeuvre un limiteur de débit sur la ligne hydraulique s'étendant entre les deux chambres de chacun de ces vérins.

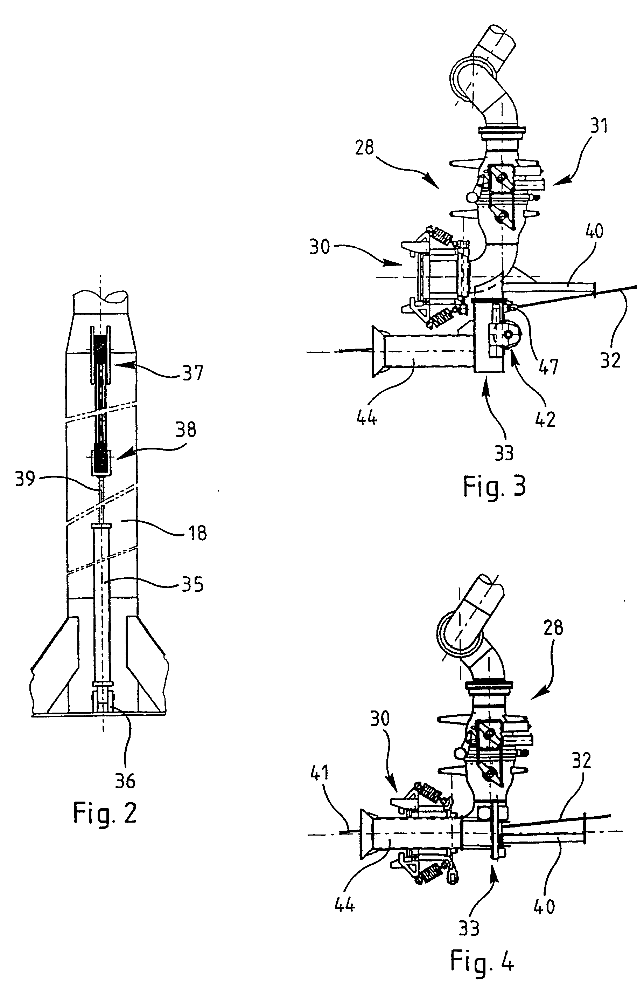

Enfin, un vérin hydraulique d'un système de déconnexion d'urgence permet de détacher le câble 32 du support 33, en retirant un axe 47 (voir figure 3) d'un support d'axe fixé au support 33 et d'une boucle à l'extrémité du câble 32.

Ce vérin n'est pas visible sur les figures car il se trouve dans l'alignement de l'axe 47.

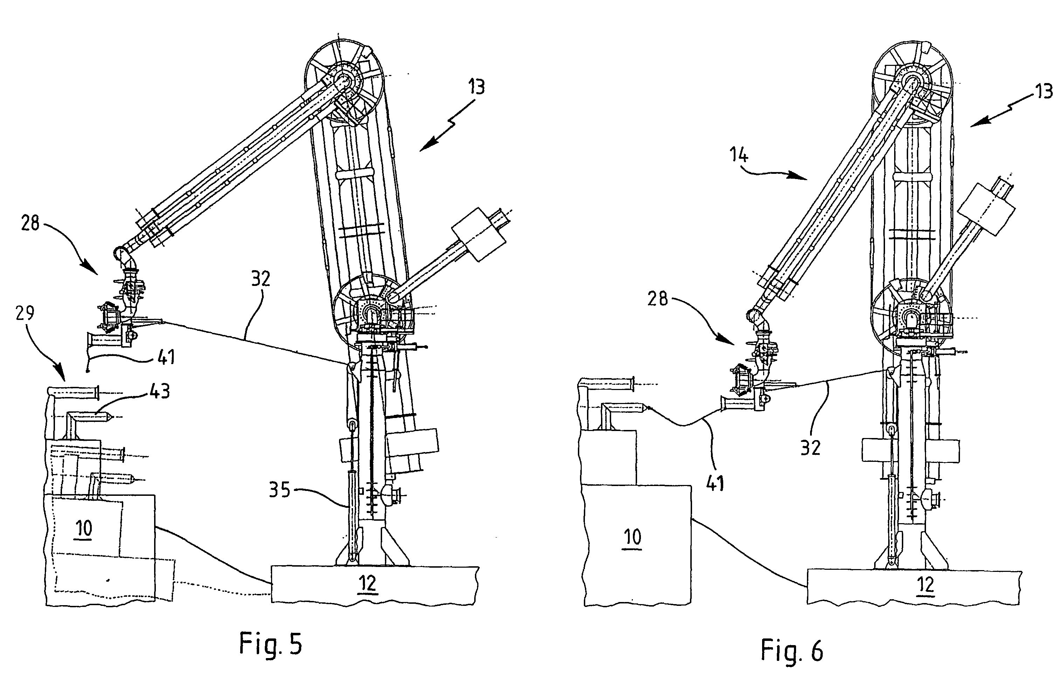

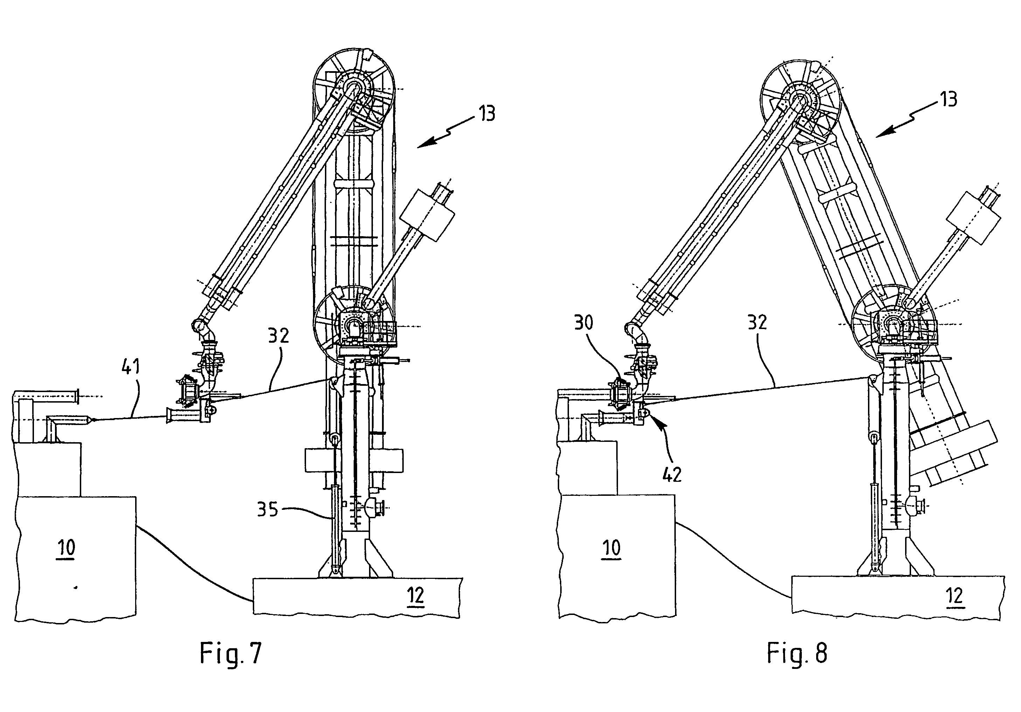

La procédure de raccordement est la suivante :
1) Un opérateur utilise tout d'abord un boîtier de commande à distance pour amener le système de raccordement 28 au-dessus du manifold 29 (voir figure 5). Une pression réduite peur être appliquée au vérin 35 pour éviter tout relâchement du câble 32 au cours de cette phase.
   Puis le câble de connexion 41 est déroulé du treuil 42 et on l'amène à l'extrémité du tronçon de guidage 43 au moyen du filin messager pour l'y fixer (voir figure 6).
2) Comme montré sur cette figure 6, le bras de chargement 14 est alors manoeuvré jusqu'à une position intermédiaire entre un état stocké et un état de connexion et le mode "roue libre" de ce bras est activé.
3) Le câble 32 est alors activé par l'application d'une pression constante au vérin hydraulique 35 (voir figure 7).
   Cette action n'est pas possible si le bras 14 n'est pas dans le mode "roue libre".
4) Le treuil de connexion 42 est ensuite activé de façon à raccourcir la longueur de câble de connexion 41 déroulé et à permettre l'engagement des tronçons de guidage 43 et 44 (voir figure 1). Dans le même temps, le câble 32 est soumis à une tension constante.
   Ainsi, plus le bras de chargement 14 est proche du manifold 29, mieux il suit les mouvements du navire 10 visibles sur la figure 5. L'alignement final est assuré avant que le coupleur hydraulique 30 atteigne la bride de ce manifold 29.
5) Comme montré sur la figure 8, le coupleur hydraulique 30 vient alors se connecter à la bride du manifold 29 et une valve hydraulique de limitation arrête automatiquement le treuil de connexion 42.
   Avant que les opérations de chargement et de déchargement ne puissent commencer, la tension appliquée au câble 32 est réduite jusqu'à un minimum nécessaire pour maintenir le câble sans mou. En outre, les systèmes de déconnexion d'urgence sont armés. Les séquences de refroidissement, de chargement et de déchargement peuvent alors commencer.

Le processus de déconnexion utilise la même logique, selon une séquence inverse.

On appréciera que, grâce à l'ensemble de chargement et de déchargement 13 conforme à l'invention, il est possible de réaliser une procédure de connexion ou de déconnexion en douceur et dans des conditions de mer difficiles.

En outre, il n'est pas nécessaire d'apporter des modifications importantes à un ensemble existant pour le rendre conforme à l'invention.

Il n'est pas non plus nécessaire de mettre en oeuvre des moyens complexes.

Enfin, les procédures de connexion et de déconnexion ne dépendent pas de la dextérité de l'opérateur et peuvent être effectuées avec des déplacements relatifs importants.

Dans le cas du mode de réalisation des figures 1 à 8, le support 33 et les éléments qui y sont fixés sont disposés sous le coupleur hydraulique 30.

Ce support 33 est cependant, de préférence, placé à côté du coupleur hydraulique 30, comme montré sur la figure 4. Cette solution offre les avantages suivants :
- le tronçon de guidage mâle 43 étant placé parallèlement au et à côté du manifold 29, il est possible de placer une plate forme d'accès au manifold 29 et l'espace libre sous le manifold 29 permet les opérations d'entretien sur le navire citerne 10 ;
- des mouvements réduits du coupleur hydraulique 30, du fait que l'axe du câble de connexion 41 est placé au même niveau (en direction verticale) que l'axe de ce coupleur 30.

Dans un autre mode de réalisation, le vérin hydraulique 35 peut être remplacé par un treuil actionné par une transmission hydraulique alimentée sous une pression hydraulique constante.

Par ailleurs, l'ensemble de chargement et de déchargement 13 peut être du type à compas de canalisation auto porteur et l'équilibrage peut être effectué avec des moyens différents.

Bien entendu, l'invention n'est nullement limitée aux modes de réalisation décrits et représentés, qui n'ont été donnés qu'à titre d'exemples.

En particulier, elle comprend tous les moyens constituants des équivalents techniques des moyens décrits, ainsi que leurs combinaisons.

Par ailleurs, l'ensemble 13 conforme à l'invention peut être utilisé pour transférer des fluides autres que du gaz naturel liquéfié. Parmi ces fluides, on citera notamment le gaz de pétrole liquéfié et les condensats.

## Revendications

1. Ensemble de chargement et de déchargement de produits, qui comporte un bras (14) de chargement et de déchargement installé à un premier emplacement et ayant un compas de canalisation (15, 16) monté par l'une de ses extrémités sur une embase (18) et pourvu à l'autre de ses extrémités d'un système de raccordement (28) du compas de canalisation à un moyen de couplage (29) installé au second emplacement, un câble (32) étant relié par l'une de ses extrémités au système de raccordement (28) et par l'autre de ses extrémités à des moyens (35-39) adaptés à soumettre ce câble (32) à une tension constante, et qui est **caractérisé en ce qu'**il comporte en outre un treuil de connexion (41) sur lequel est enroulé un câble de connexion permettant d'amener le système de raccordement (28) dans une position de connexion au moyen de couplage (29), à l'encontre de la tension constante exercée sur le câble relié au système de raccordement et **en ce que** le bras (14) de chargement et de déchargement est un bras équilibré.

2. Ensemble selon la revendication 1, **caractérisé en ce que** les moyens adaptés à soumettre le câble (32) à une tension constante comportent un vérin hydraulique (35).

3. Ensemble selon la revendication 2, **caractérisé en ce que** le câble destiné à être soumis à une tension constante est relié au vérin hydraulique (35) par l'intermédiaire de deux jeux de poulies (37, 38) autour desquelles il est enroulé.

4. Ensemble selon l'une quelconque des revendications 1 à 3, **caractérisé en ce que** le système de raccordement (28) comporte un coupleur hydraulique (30) destiné à être raccordé à un moyen de couplage constitué par un manifold (29).

5. Ensemble selon l'une quelconque des revendications 1 à 4, **caractérisé en ce qu'**il comporte un tronçon de tube de guidage (43) installé au second emplacement et destiné à pénétrer dans un tronçon de tube (44) fixé au système de raccordement (28), pour guider ce dernier lorsqu'il arrive à proximité du moyen de couplage.

6. Ensemble selon l'une quelconque des revendications 1 à 5, **caractérisé en ce qu'**il comporte des systèmes de déconnexion d'urgence.

7. Ensemble selon l'une quelconque des revendications 1 à 6, **caractérisé en ce qu'**il comporte une tige d'alignement (40) du système de raccordement (28) sur le câble (32) destiné à être soumis à une tension constante et le câble de connexion (41), cette tige (40) étant fixée au système de raccordement (28) et ayant un anneau de passage du câble (32) destiné à être soumis à une tension constante.

8. Ensemble selon la revendication 1, **caractérisé en ce que** les moyens adaptés à soumettre le câble (32) à une tension constante comportent un treuil actionné par une transmission hydraulique alimentée sous une pression hydraulique constante.

9. Ensemble selon l'une quelconque des revendications 1 à 8, **caractérisé en ce que** le bras (14) de chargement et de déchargement est équilibré au moyen d'un système de contrepoids.

## Patentansprüche

1. Anordnung zum Beladen und Entladen von Produkten, welche einen Arm (14) zum Beladen und zum Entladen aufweist, der an einer ersten Stelle installiert ist und einen Ausleger für ein Röhrensystem (15, 16) aufweist, der mit einem seiner Enden auf einem Sockel (18) montiert ist und am anderen seiner Enden mit einem Anschlusssystem (28) des Auslegers für ein Röhrensystem mit einem Kopplungsmittel (29) versehen ist, das an einer zweiten Stelle installiert ist, wobei ein Kabel (32) mit einem seiner Enden mit dem Anschlusssystem (28) und mit dem anderen seiner Enden mit Mitteln (35, 39) verbunden ist, die angepasst sind, dieses Kabel (32) einer konstanten Spannung zu unterwerfen, welche **dadurch gekennzeichnet ist, dass** sie ferner eine Verbindungswinde (41) aufweist, auf welcher ein Verbindungskabel aufgerollt ist, das erlaubt, das Anschlusssystem (28) in eine Position der Verbindung mit dem Kopplungsmittel (29) zu führen, unter der konstanten Spannung, die auf das Kabel ausgeübt wird, welches mit dem Anschlusssystem verbunden ist, und dadurch, dass der Arm (14) zum Beladen und Entladen ein ausbalancierter Arm ist.

2. Anordnung nach Anspruch 1, **dadurch gekennzeichnet, dass** die Mittel, die angepasst sind, das Kabel (32) einer konstanten Spannung zu unterwerfen, einen hydraulischen Zylinder (35) aufweisen.

3. Anordnung nach Anspruch 2, **dadurch gekennzeichnet, dass** das Kabel, das dazu bestimmt ist, einer konstanten Spannung unterworfen zu werden, mit dem hydraulischen Zylinder (35) über zwei Sätze von Rollen (37, 38) verbunden ist, um welche es herumläuft.

4. Anordnung nach einem der Ansprüche 1 bis 3, **dadurch gekennzeichnet, dass** das Verbindungssystem (28) einen hydraulischen Koppler (30) aufweist, der dazu bestimmt ist, mit einem Kopplungsmittel verbunden zu werden, das durch einen Krümmer (29) gebildet wird.

5. Anordnung nach einem der Ansprüche 1 bis 4, **dadurch gekennzeichnet, dass** sie ein Führungsröhrenteilstück (43) aufweist, das an der zweiten Stelle installiert ist und dazu bestimmt ist, in ein Röhrenteilstück (44) einzudringen, das am Anschlusssystem (28) befestigt ist, um letzteres zu führen, wenn es in Nähe der Kopplungsmittel kommt.

6. Anordnung nach einem der Ansprüche 1 bis 5, **dadurch gekennzeichnet, dass** sie Systeme zur Notfall-Entkopplung aufweist.

7. Anordnung nach einem der Ansprüche 1 bis 6, **dadurch gekennzeichnet, dass** sie ein Gestänge zur Ausrichtung (40) des Anschlusssystems (28) auf dem Kabel (32), das dazu bestimmt ist, einer konstanten Spannung unterworfen zu werden, und dem Verbindungskabel (41) aufweist, wobei das Gestänge (40) am Anschlusssystem (28) befestigt ist und einen Ring zum Hindurchführen des Kabels (32) besitzt, welches dazu bestimmt ist, einer konstanten Spannung unterworfen zu werden.

8. Anordnung nach Anspruch 1, **dadurch gekennzeichnet, dass** die Mittel, die dazu angepasst sind, ein Kabel (32) einer konstanten Spannung zu unterwerfen, eine Winde aufweisen, die über eine hydraulische Übersetzung betätigt werden, welche mit einem konstanten hydraulischen Druck versorgt wird.

9. Anordnung nach einem der Ansprüche 1 bis 8, **dadurch gekennzeichnet, dass** der Arm (14) zum Beladen und zum Entladen balanciert ist mittels eines Systems von Gegengewichten.

## Claims

1. Assembly for loading and unloading products, which comprises a loading and unloading arm (14) installed at a first site and having a compass-style duct system (15, 16) one end of which is mounted on a base (18) and provided at the other of its ends with a connection system (28) of the compass-style duct system to a coupling means (29) installed at the second site, a cable (32) being joined by one of its ends to the connection system (28) and by the other of its ends to means (35-39) suitable for subjecting this cable (32) to a constant tension, and which is **characterized in that** it comprises, in addition, a connection winch (41) on which a connection cable is wound for allowing the connection system (28) to be brought into a position of connection to the coupling means (29), against the constant tension exerted on the cable joined to the connection system and **in that** the loading.and unloading arm (14) is a balanced arm.

2. Assembly according to claim 1, **characterized in that** the means suitable for subjecting the cable (32) to a constant tension comprise a hydraulic jack (35).

3. Assembly according to claim 2, **characterized in that** the cable intended to be subjected to a constant tension is connected to the hydraulic jack (35) via two sets of pulleys (37, 38) around which it is wound.

4. Assembly according to any one of claims 1 to 3, **characterized in that** the connection system (28) comprises a hydraulic coupling (30) intended to be connected to a coupling means constituted by a manifold (29).

5. Assembly according to any one of claims 1 to 4, **characterized in that** it comprises a guide tube section (43) installed at the second site and intended to enter a tube section (44) fixed to the connection system (28), in order to guide the latter when it arrives close to the coupling means.

6. Assembly according to any one of claims 1 to 5, **characterized in that** it comprises emergency disconnection systems.

7. Assembly according to any one of claims 1 to 6, **characterized in that** it comprises an alignment rod (40) for aligning the connection system (28) on the cable (32) intended to be subjected to a constant tension and the connection cable (41), this rod (40) being fixed to the connection system (28) and having a ring through which the cable (32) intended to be subjected to a constant tension passes.

8. Assembly according to claim 1, **characterized in that** the means suitable for subjecting the cable (32) to a constant tension comprise a winch actuated by an hydraulic transmission fed at a constant hydraulic pressure.

9. Assembly according to any one of claims 1 to 8, **characterized in that** the loading/unloading arm (14) is balanced by a counterweight system.
